# EUROPEAN PATENT APPLICATION

(11) **EP 4 553 933 A1**
(43) Veröffentlichungstag der Anmeldung: **14.05.2025**
(21) Anmeldenummer: 22949829.0
(22) Anmeldetag: 07.07.2022
(51) Int. Cl.: H01M 8/0284, H01M 8/0273, H01M 8/0276

(54) **DICHTUNGSELEMENT FÜR WASSERELEKTROLYSESTAPEL ODER BRENNSTOFFZELLE, WASSERELEKTROLYSESTAPEL UND BRENNSTOFFZELLE**

(71) Anmelder: Schaeffler Technologies AG & Co. KG, 91074 Herzogenaurach (DE)
(72) Erfinder: LIU, Xin, Shanghai 201804 (CN); LI, Ding, Shanghai 201804 (CN); WEI, Jianfei, Shanghai 201804 (CN); NIE, Xiao, 91074 Herzogenaurach (DE); XIA, Yan, Shanghai 201804 (CN)
(86) Internationale Anmeldenummer: PCT/CN2022/104339
(87) Internationale Veröffentlichungsnummer: WO 2024/007244

(57) **Zusammenfassung**

Die vorliegende Offenbarung betrifft eine Dichtung für einen Wasserelektrolyse-Stack oder eine Brennstoffzelle, wobei die Dichtung einen Grundkörper, der aus einem ersten Material hergestellt ist, und eine Schutzmembran umfasst, mit der die Außenoberfläche des Grundkörpers belegt ist, wobei die Schutzmembran aus einem zweiten Material hergestellt ist, wobei sich das zweite Material von dem ersten Material unterscheidet und das zweite Material eine geringere Gasdurchlässigkeit als das erste Material aufweist. Die vorliegende Erfindung betrifft ferner einen Wasserelektrolyse-Stack mit mindestens einer solchen Dichtung sowie eine Brennstoffzelle mit mindestens einer solchen Dichtung.

## Beschreibung

Die vorliegende Erfindung betrifft eine Dichtung. Die vorliegende Erfindung betrifft ferner einen Wasserelektrolyse-Stack mit mindestens einer solchen Dichtung sowie eine Brennstoffzelle mit mindestens einer solchen Dichtung.

Die Wasserstoffenergie ist als neuartige Energie weniger umweltschädlich und relativ effizient, weshalb das Augenmerk immer weiter auf Wasserelektrolyse-Stacks und Brennstoffzellen liegt, bei denen die Wasserstoffenergie verwendet wird. Die Wasserelektrolyse-Stacks werden zur Elektrolyse von Wasser zur Herstellung von Wasserstoff und dadurch zur Bildung von Sauerstoff und Wasserstoff verwendet, während die Brennstoffzellen zur Synthese von Sauerstoff und Wasserstoff zu Wasser und damit zur direkten Umwandlung der chemischen Energie von Wasserstoff und Sauerstoff in elektrische Energie verwendet werden. Bei diesen beiden Vorrichtungen ist eine Abdichtung gegen Sauerstoff und Wasserstoff erforderlich. Gemäß dem Stand der Technik werden üblicherweise Dichtungen aus Gummimaterialien (z. B. EPDM, KFM usw.) verwendet, da Gummimaterialien nicht nur eine gute Gasdichtigkeit, sondern auch eine gute Verformbarkeit aufweisen, sodass die Gummimaterialien auch beim Komprimieren einen guten Anpressdruck bereitstellen können, wodurch eine gute Dichtigkeit gegen Sauerstoff und Wasserstoff gewährleistet werden kann.

Es wurde jedoch getestet, dass der Wasserelektrolyse-Stack oder die Brennstoffzelle gemäß dem Stand der Technik selbst dann ein hohes Austrittsrisiko aufweist, wenn die oben genannte Dichtung einer großen Andruckkraft ausgesetzt ist. Insbesondere wenn der Innendruck der Vorrichtung 10 MPa erreicht, ist das Austrittsrisiko des Wasserelektrolyse-Stacks oder der Brennstoffzelle gemäß dem Stand der Technik höher, wodurch die Verwendungssicherheit der Vorrichtung beeinträchtigt werden könnte. Der Grund dafür besteht darin, dass ein Gummimaterial selbst viele kleine Luftporen aufweist und daher bienenwabenförmig ausgebildet ist, wobei Gas (insbesondere Wasserstoff mit einer sehr hohen Gasdurchlässigkeit) unter einem vorbestimmten Druck durch diese kleinen Luftporen strömen kann. Selbst wenn das Gas nicht aus einer Kontaktoberfläche zwischen der Dichtung und einem anderen Element austritt, könnte daher das Gas leicht aus den kleinen Luftporen innerhalb des Gummimaterials der Dichtung austreten.

Daher besteht ein dringender Bedarf an einer Dichtung, um den Gasaustritt durch die kleinen Luftporen innerhalb des Gummimaterials zu verringern oder zu verhindern, wodurch die Verwendungssicherheit des Wasserelektrolyse-Stacks oder der Brennstoffzelle verbessert wird.

Eine Aufgabe der vorliegenden Erfindung besteht darin, eine Dichtung für einen Wasserelektrolyse-Stack oder eine Brennstoffzelle bereitzustellen, wobei diese Dichtung eine deutlich verringerte Gasdurchlässigkeit aufweist, wodurch das Austrittsrisiko von Gas aus der Dichtung wirksam verringert oder sogar verhindert werden kann und somit eine gute Gasdichtigkeit gegen Gase sichergestellt wird. Darüber hinaus kann diese Dichtung ferner eine stabile Struktur und eine relativ lange Lebensdauer aufweisen. Eine weitere Aufgabe der vorliegenden Erfindung besteht darin, einen Wasserelektrolyse-Stack mit einer solchen Dichtung und eine Brennstoffzelle mit einer solchen Dichtung bereitzustellen.

Gemäß einer Ausführungsform der vorliegenden Erfindung wird eine Dichtung für einen Wasserelektrolyse-Stack bereitgestellt, wobei die Dichtung einen Grundkörper, der aus einem ersten Material hergestellt ist, und eine Schutzmembran umfasst, mit der die Außenoberfläche des Grundkörpers belegt ist, wobei die Schutzmembran aus einem zweiten Material hergestellt ist, wobei sich das zweite Material von dem ersten Material unterscheidet und das zweite Material eine geringere Gasdurchlässigkeit als das erste Material aufweist.

Gemäß einer bevorzugten Ausführungsform der vorliegenden Erfindung umfasst die Dichtung ferner eine Klebeschicht, die zwischen dem Grundkörper und der Schutzmembran vorgesehen ist, um den Grundkörper und die Schutzmembran durch Kleben aneinander zu befestigen.

Gemäß einer bevorzugten Ausführungsform der vorliegenden Erfindung ist die Klebeschicht aus einer höhermolekularen organischen Substanz hergestellt.

Gemäß einer bevorzugten Ausführungsform der vorliegenden Erfindung ist zwischen dem Grundkörper und der Klebeschicht und/oder zwischen der Klebeschicht und der Schutzmembran ferner eine Metallschicht vorgesehen.

Gemäß einer bevorzugten Ausführungsform der vorliegenden Erfindung ist die Metallschicht partikelförmig oder lagenförmig ausgebildet und aus mindestens einem der Elemente Aluminium, Eisen, Magnesium, Mangan und Zink hergestellt.

Gemäß einer bevorzugten Ausführungsform der vorliegenden Erfindung schmiegt sich die Schutzmembran unmittelbar an den Grundkörper an und ist fest mit dem Grundkörper verbunden.

Gemäß einer bevorzugten Ausführungsform der vorliegenden Erfindung sind das erste Material ein Gummimaterial und das zweite Material ein Kunststoffmaterial.

Gemäß einer bevorzugten Ausführungsform der vorliegenden Erfindung weist die Schutzmembran eine Dicke in einem Bereich von 10 Nanometern bis 100 Nanometern auf.

Gemäß einer bevorzugten Ausführungsform der vorliegenden Erfindung weist die Schutzmembran eine Dicke in einem Bereich von 30 Nanometern bis 50 Nanometern auf.

Gemäß einer bevorzugten Ausführungsform der vorliegenden Erfindung umfasst die Dichtung eine erste seitliche Dichtungsoberfläche und eine zweite seitliche Dichtungsoberfläche, die einander gegenüberliegen, und auf der ersten seitlichen Dichtungsoberfläche und/oder der zweiten seitlichen Dichtungsoberfläche ist eine Reliefstruktur ausgebildet.

Gemäß einer weiteren Ausführungsform der vorliegenden Erfindung wird ein Wasserelektrolyse-Stack bereitgestellt, der mindestens eine oben beschriebene Dichtung umfasst.

Gemäß einer weiteren Ausführungsform der vorliegenden Erfindung wird eine Brennstoffzelle bereitgestellt, die mindestens eine oben beschriebene Dichtung umfasst.

Gemäß der vorliegenden Erfindung kann durch das Umhüllen der Außenoberfläche eines Grundkörpers aus einem ersten Material mit einer Schutzmembran aus einem zweiten Material, das eine geringere Gasdurchlässigkeit als das erste Material aufweist, das Austrittsrisiko von Gas aufgrund eines leichten Eindringens durch die kleinen Luftporen innerhalb des ersten Materials wirksam verringert oder sogar verhindert werden, wodurch eine gute Dichtwirkung der Dichtung gegen Gase sichergestellt wird.

Die Merkmale, Vorteile und technischen Wirkungen von beispielhaften Ausführungsformen der vorliegenden Anmeldung werden im Folgenden unter Bezugnahme auf die beigefügten Zeichnungen beschrieben.
Figur 1 zeigt eine strukturelle schematische Darstellung eines Wasserelektrolyse-Stacks gemäß einer Ausführungsform der vorliegenden Erfindung;
Figur 2 zeigt eine schematische Explosionsdarstellung des Wasserelektrolyse-Stacks gemäß einer Ausführungsform der vorliegenden Erfindung;
Figur 3 zeigt eine perspektivische schematische Darstellung einer Dichtung gemäß einer ersten Ausführungsform der vorliegenden Erfindung;
Figur 4 zeigt eine schematische Darstellung eines Teilschnitts der Dichtung gemäß der ersten Ausführungsform der vorliegenden Erfindung;
Figur 5 zeigt eine strukturelle schematische Darstellung einer Dichtung gemäß einer zweiten Ausführungsform der vorliegenden Erfindung;
Figur 6 zeigt eine schematische Darstellung eines Teilschnitts der Dichtung gemäß der zweiten Ausführungsform der vorliegenden Erfindung; und
Figur 7 zeigt eine schematische Darstellung eines Teilschnitts einer Dichtung gemäß einer dritten Ausführungsform der vorliegenden Erfindung.

Die Ausführungen der vorliegenden Anmeldung werden im Folgenden in Verbindung mit den beigefügten Zeichnungen und Ausführungsformen im Detail weiter beschrieben. Die ausführliche Beschreibung der folgenden Ausführungsformen und die beigefügten Zeichnungen dienen einer beispielhaften Veranschaulichung des Prinzips der vorliegenden Anmeldung, können jedoch nicht dazu verwendet werden, den Umfang der vorliegenden Anmeldung zu beschränken, d. h., die vorliegende Anmeldung ist nicht auf die beschriebenen Ausführungsformen beschränkt.

In der Beschreibung der vorliegenden Anmeldung dient die durch die Begriffe "links", "rechts", "innen", "außen" und dergleichen angegebene Ausrichtung oder Positionsbeziehung, soweit nicht anders angegeben, nur der Erleichterung der Beschreibung der vorliegenden Anmeldung und der Vereinfachung der Beschreibung, anstatt anzugeben oder anzudeuten, dass die Vorrichtung oder das Element, auf die/das Bezug genommen wird, eine bestimmte Ausrichtung haben oder in einer bestimmten Ausrichtung aufgebaut und betrieben werden muss, und ist daher nicht als Beschränkung für die vorliegende Anmeldung zu verstehen. Darüber hinaus werden die Begriffe "erster/erste/erstes", "zweiter/zweite/zweites" und dergleichen nur zu beschreibenden Zwecken verwendet und sind nicht als Angabe oder Andeutung einer relativen Bedeutung zu verstehen. Die in der folgenden Beschreibung vorkommenden Ausrichtungsbegriffe stellen die in den Figuren gezeigten Richtungen und keine Definition für die spezifische Konstruktion der vorliegenden Anmeldung dar.

Anzumerken ist, dass in der Beschreibung der vorliegenden Anmeldung die Begriffe "Montage", "Verbindung" und "Anschluss", soweit nicht anders explizit festgelegt und definiert, in einem weit gefassten Sinne zu verstehen sind. Dabei kann es sich beispielsweise um eine feste Verbindung oder eine lösbare Verbindung oder eine einteilige Verbindung handeln. Es kann sich auch um eine direkte Verbindung oder eine indirekte Verbindung über ein Zwischenmedium handeln. Für den Fachmann sind die spezifischen Bedeutungen der oben genannten Begriffe im Sinne der vorliegenden Anmeldung gemäß spezifischen Situationen zu verstehen.

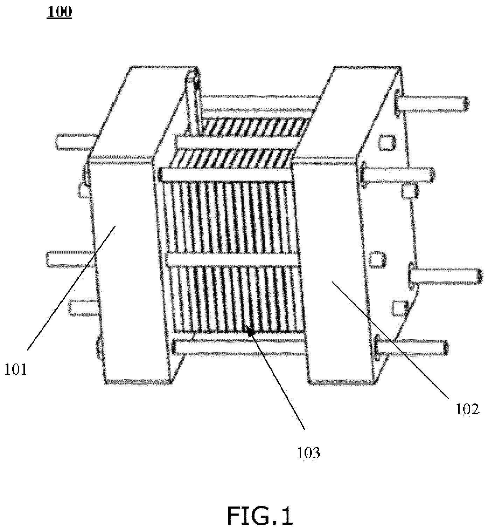

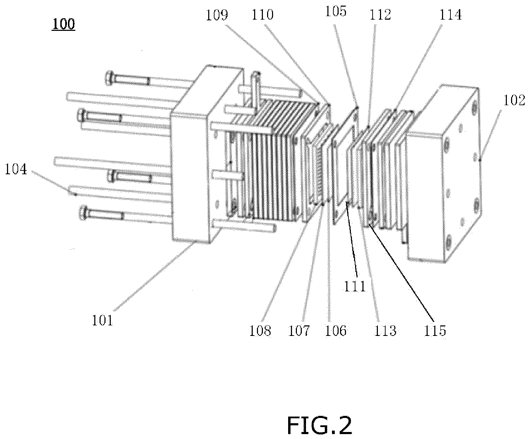

Die Figuren 1 und 2 zeigen einen Wasserelektrolyse-Stack 100 gemäß einer Ausführungsform der vorliegenden Erfindung, wobei der Wasserelektrolyse-Stack 100 zwei voneinander beabstandet angeordnete Endplatten 101 und 102 sowie eine Vielzahl von Elektrolyseeinheiten 103 umfasst, die zwischen den beiden Endplatten 101 und 102 angeordnet sind. Diese beiden Endplatten sind über eine Vielzahl von Positionierungszapfen 104 sowie eine Vielzahl von Bolzen fest miteinander verbunden, um die Vielzahl der dazwischen liegenden Elektrolyseeinheiten 103 festzuklemmen.

Jede Elektrolyseeinheit 103 umfasst eine Membranelektrodenbaugruppe 105, eine Kathodenbaugruppe und eine Anodenbaugruppe, wobei die Kathodenbaugruppe und die Anodenbaugruppe jeweils auf einer der beiden Seiten, d. h. der linken und der rechten Seite, der Membranelektrodenbaugruppe angeordnet sind. Die Membranelektrodenbaugruppe umfasst eine Protonenaustauschmembran und einen um die Protonenaustauschmembran herum angeordneten Montagerahmen.

Die Kathodenbaugruppe ist auf der linken Seite der Membranelektrodenbaugruppe 105 angeordnet und umfasst nacheinander angeordnete Komponenten wie etwa eine Kathodenkatalysatorschicht 106, eine Kathodendiffusionsschicht 107, eine poröse Kathodenplatte 108 und eine Kathodenmontageplatte 109 und dergleichen. Die Kathodenkatalysatorschicht 106 ist auf der linken Seitenoberfläche der Protonenaustauschmembran aufgebracht. Die Kathodendiffusionsschicht 107 ist in enger Nähe zu der Kathodenkatalysatorschicht 106 angeordnet. Als Kathodendiffusionsschicht 107 können Materialien wie etwa poröses Titan, Kohlenstoffgewebe, Kohlenstoffpapier und dergleichen, ausgewählt werden, die während des Wasserelektrolyseprozesses die Funktionen der elektrischen Leitung und der Übertragung von Wasser und Gas erfüllen. Wie in Figur 2 gezeigt, ist die poröse Kathodenplatte 108 auf der linken Seite der Kathodendiffusionsschicht 107 angeordnet und umfasst eine Vielzahl von Mikroporen zur weiteren Übertragung von Wasser und Gas. An einer entsprechenden Stelle auf der Kathodenmontageplatte 109 sind Positionierungslöcher vorgesehen, und die feste Positionierung der Komponenten wie etwa der Kathodendiffusionsschicht 107 und der porösen Kathodenplatte 108 und dergleichen kann durch den Durchgang der oben genannten Positionierungszapfen durch die Positionierungslöcher ermöglicht werden. Die Kathodenmontageplatte 109 kann mit einem korrosionsbeständigen Material wie etwa rostfreiem Stahl und dergleichen bearbeitet werden.

Analog dazu ist die Anodenbaugruppe auf der rechten Seite der Membranelektrodenbaugruppe 105 angeordnet und umfasst nacheinander angeordnete Komponenten wie etwa eine Anodenkatalysatorschicht 111, eine Anodendiffusionsschicht 112, eine poröse Anodenplatte 113 und eine Anodenmontageplatte 114 und dergleichen. Die Anodenkatalysatorschicht 111 ist auf der rechten Seitenoberfläche der Protonenaustauschmembran aufgebracht. Die Anodendiffusionsschicht 112 ist in enger Nähe zu der Anodenkatalysatorschicht 111 angeordnet. Als Anodendiffusionsschicht 112 können Materialien wie etwa poröses Titan, Kohlenstoffgewebe, Kohlenstoffpapier und dergleichen ausgewählt werden, die während des Wasserelektrolyseprozesses die Funktionen der elektrischen Leitung und der Übertragung von Wasser und Gas erfüllen. Die poröse Anodenplatte 113 ist auf der rechten Seite der Anodendiffusionsschicht 112 angeordnet und umfasst eine Vielzahl von Mikroporen zur weiteren Übertragung von Wasser und Gas. An einer entsprechenden Stelle auf der Anodenmontageplatte 114 sind ebenfalls Positionierungslöcher vorgesehen, und die feste Positionierung der Komponenten wie etwa der Anodendiffusionsschicht 112 und der porösen Anodenplatte 113 und dergleichen kann durch den Durchgang der oben genannten Positionierungszapfen durch die Positionierungslöcher ermöglicht werden. Die Anodenmontageplatte 114 kann mit einem korrosionsbeständigen Material wie etwa rostfreiem Stahl und dergleichen bearbeitet werden.

Nach dem Eintritt von Wasser in die einzelnen Elektrolyseeinheiten in dem Wasserelektrolyse-Stack 100 werden dadurch Sauerstoff- und Wasserstoffionen an der Anodenbaugruppe jeder Elektrolyseeinheit erzeugt, wobei der Sauerstoff der Reihe nach über die Kathodendiffusionsschicht 107 und die poröse Kathodenplatte 108 der Anodenbaugruppe direkt abgeleitet wird, während die Wasserstoffionen zunächst durch die Membranelektrodenbaugruppe zu der Kathodenbaugruppe gelangen und dann, nachdem Wasserstoff mittels der Kathodenbaugruppe erzeugt wurde, wiederum der Reihe nach über die Kathodendiffusionsschicht 107 und die poröse Kathodenplatte 108 der Kathodenbaugruppe abgeleitet werden.

Um die Dichtigkeit gegen Wasserstoff und Sauerstoff während des Zuführprozesses von Wasserstoff und Sauerstoff zu verstärken, sind in der Regel Dichtungen zwischen der Membranelektrodenbaugruppe und der Anodenbaugruppe sowie zwischen der Membranelektrodenbaugruppe und der Kathodenbaugruppe vorgesehen. Wie in Figur 2 gezeigt, ist die Dichtung 110 beispielsweise zwischen der Kathodenmontageplatte 109 der Kathodenbaugruppe und dem Montagerahmen der Membranelektrodenbaugruppe festgeklemmt und allseitig um die Kathodendiffusionsschicht 107 und die poröse Kathodenplatte 108 der Kathodenbaugruppe herum angeordnet, während die Dichtung 115 zwischen der Anodenmontageplatte 114 der Anodenbaugruppe und dem Montagerahmen der Membranelektrodenbaugruppe festgeklemmt und allseitig um die Anodendiffusionsschicht 112 und die poröse Anodenplatte 113 der Anodenbaugruppe herum angeordnet ist. Die Dichtung 110 und die Dichtung 115 weisen eine im Wesentlichen identische Struktur auf. Im Folgenden wird daher die zwischen der Membranelektrodenbaugruppe und der Kathodenbaugruppe angeordnete Dichtung 110 als Beispiel im Detail beschrieben.

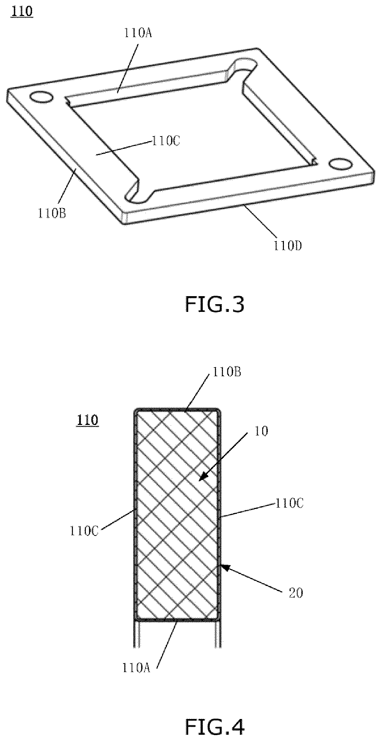

Figur 3 zeigt eine perspektivische schematische Darstellung einer Dichtung 110 gemäß einer ersten Ausführungsform der vorliegenden Erfindung, während Figur 4 eine schematische Darstellung eines Teilschnitts der Dichtung 110 gemäß der ersten Ausführungsform der vorliegenden Erfindung zeigt. Wie in den Figuren 3 und 4 gezeigt, ist die Dichtung 110 ringförmig ausgebildet und weist im Wesentlichen eine vierseitige Form auf, um sich an die Formen der Anodenbaugruppe und der Kathodenbaugruppe anzupassen, um den Anpassungsgrad zu verstärken und eine gute Dichtigkeit der Dichtung sicherzustellen. Die vorliegende Erfindung ist jedoch nicht hierauf beschränkt. In anderen Beispielen kann die Dichtung auch eine O-förmige Form oder eine andere polygonale Struktur aufweisen.

Wie in Figur 4 gezeigt, umfasst die Dichtung 110 einen Grundkörper 10 und eine Schutzmembran 20, wobei der Grundkörper 10 die Hauptstruktur der Dichtung 110 darstellt und aus einem ersten Material hergestellt ist. Das erste Material kann beispielsweise ein Gummimaterial sein, einschließlich, aber nicht beschränkt auf: Acrylnitril-Butadien-Kautschuk (nitrile butadiene rubber, NBR), hydrierten NitrilKautschuk (hydrogenated nitrile butadiene rubber, HNBR), Fluorkautschuk (FKM), Acrylat-Kautschuk (ACM), Ethylen-Acrylat-Kautschuk (AEM), Ethylen-Propylen-DienKautschuk (ethylene propylene diene monomer, EPDM), Butyl-Kautschuk (isobutylene-isoprene rubber, IIR), Silikon-Kautschuk, Silikon-Fluor-Kautschuk und dergleichen.

Mit der Schutzmembran 20 wird die Außenoberfläche des Grundkörpers 10 belegt. Die Schutzmembran 20 bedeckt bevorzugt die gesamte Außenoberfläche des Grundkörpers 10. Die Schutzmembran 20 kann aus einem zweiten Material hergestellt sein. Das zweite Material weist eine geringere Gasdurchlässigkeit als das erste Material auf. Das zweite Material kann ein Kunststoffmaterial sein, einschließlich, aber nicht beschränkt auf: Polypropylen (polypropylene, PP), Polyethylen (polyethylene, PE), Polyethylen hoher Dichte (high density polyethylene, HDPE), Polyethylen ultrahoher Dichte (ultra high density polyethylene, UHDPE), Polytetrafluorethylen (polytetrafluoroethylene, PTFE) und dergleichen. Die Schutzmembran 20 weist im Vergleich zu dem Grundkörper 10 eine sehr geringe Dicke auf, die im Wesentlichen im Bereich von 10 Nanometern bis 100 Nanometern, bevorzugt im Bereich von 30 Nanometern bis 50 Nanometern liegt.

Die Schutzmembran 20 und der Grundkörper 10 sind untrennbar miteinander verbunden und können z. B. formschlüssig und/oder stoffschlüssig fest miteinander verbunden sein. In dieser Ausführungsform kann sich die Schutzmembran 20 durch Sintern, Heißschmelzen, Walzen, Walzpressen, Formpressen und dergleichen direkt und in unmittelbarer Nähe an den Grundkörper 10 anschmiegen.

Wie in Figur 4 gezeigt, kann die Dichtung 110 vier Dichtungsoberflächen aufweisen, d. h. eine innere Dichtungsoberfläche 110A, die allseitig an die Kathodendiffusionsschicht 107 und die poröse Kathodenplatte 108 angeformt ist, eine äußere Dichtungsoberfläche 110B, die der inneren Dichtungsoberfläche 110A gegenüberliegt und radial außerhalb der Dichtung 110 angeordnet ist, und eine erste seitliche Dichtungsoberfläche 110C sowie eine zweite seitliche Dichtungsoberfläche 110D, die zwischen der inneren Dichtungsoberfläche und der äußeren Dichtungsoberfläche verbunden sind und einander gegenüberliegen. Die erste seitliche Dichtungsoberfläche 110C liegt eng an der Kathodenmontageplatte 109 der Kathodenbaugruppe an, und die zweite seitliche Dichtungsoberfläche 110D liegt eng an dem Montagerahmen der Membranelektrodenbaugruppe 105 an. Wenn die Dichtung 110 nur aus dem Grundkörper 10 besteht, der aus dem Gummimaterial hergestellt ist, , kann das Gas bei einem Innendruck des Wasserelektrolyse-Stacks 100 von 10 MPa leicht von der inneren Dichtungsoberfläche 110A durch die kleinen Luftporen innerhalb des Gummimaterials hindurch aus der äußeren Dichtungsoberfläche 110B austreten, selbst wenn kein Spalt zwischen der ersten seitlichen Dichtungsoberfläche 110C und der Kathodenmontageplatte 109 sowie zwischen der zweiten seitlichen Dichtungsoberfläche 110D und dem Montagerahmen besteht.

Gemäß einer Ausführungsform der vorliegenden Erfindung kann jedoch durch das Umhüllen der Außenoberfläche des Grundkörpers 10 aus einem Gummimaterial mit der Schutzmembran 20 aus einem Kunststoffmaterial, das eine geringere Gasdurchlässigkeit aufweist, das Austrittsrisiko von Gas aufgrund eines leichten Eindringens durch die kleinen Luftporen innerhalb des Gummimaterials wirksam verringert oder sogar verhindert werden, wodurch eine gute Dichtwirkung der Dichtung 110 gegen Gase sichergestellt wird.

Da das Kunststoffmaterial außerdem eine gute Korrosionsbeständigkeit aufweist, kann die Dichtung 110 mit der oben beschriebenen Schutzmembran 20 aus dem Kunststoffmaterial in einer sauren oder alkalischen Umgebung verwendet werden.

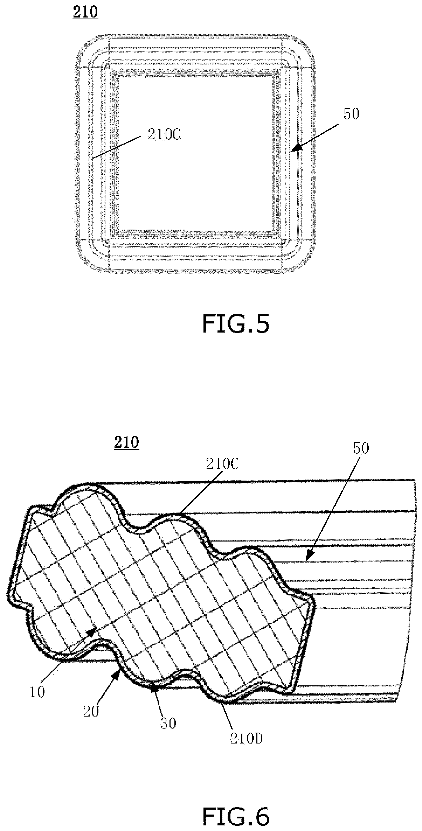

Hierbei ist anzumerken, dass in der in den Figuren 3 und 4 gezeigten Ausführungsform die Schutzmembran 20 sich an den Grundkörper 10 anschmiegt und dadurch direkt mit dem Grundkörper 10 fest verbunden ist. In anderen Ausführungsformen können die Schutzmembran 20 und der Grundkörper 10 jedoch indirekt über eine andere Schicht oder andere Schichten fest miteinander verbunden sein. Der Aufbau, bei dem der Grundkörper 10 über die Klebeschicht an der Schutzmembran 20 davon beabstandet befestigt ist, wird im Folgenden unter Bezugnahme auf die Figuren 5 bis 7 beschrieben.

Figuren 5 und 6 zeigen jeweils eine strukturelle schematische Darstellung und eine schematische Darstellung eines Teilschnitts einer Dichtung 210 gemäß einer zweiten Ausführungsform der vorliegenden Erfindung. Die in den Figuren 5 und 6 gezeigte Dichtung 210 ist mit der in Figur 4 gezeigten Dichtung 110 im Wesentlichen identisch. Die Gemeinsamkeiten werden nicht wiederholt, sondern nur die Unterschiede werden im Folgenden beschrieben, wobei die gleichen Bezugszeichen die gleichen Symbole bezeichnen. Die in Figur 5 gezeigte Dichtung ist ferner mit einer Klebeschicht 30 zwischen dem Grundkörper 10 und der Schutzmembran 20 versehen. Die Dicke der Klebeschicht 30 liegt im Wesentlichen in derselben Größenordnung wie die Dicke der Schutzmembran 20, d. h., die Dicke der Klebeschicht 30 liegt ebenfalls im Wesentlichen im Bereich von 10 Nanometern bis 100 Nanometern, bevorzugt im Bereich von 30 Nanometern bis 50 Nanometern. In dieser Ausführungsform ist die Klebeschicht 30 aus einer höhermolekularen organischen Substanz hergestellt. Die höhermolekularen organischen Substanzen können Polyester (polyethylene terephthalate, PET), Polyethylen (polyethylene, PE), Polyurethan (polyurethane, PU) und dergleichen umfassen, sind aber nicht darauf beschränkt. Da diese höhermolekularen organischen Substanzen einen hohen Grad an Aktivität und Polarität zeigen und eine ausgezeichnete chemische Haftung mit Materialien wie etwa Metall, Glas, Gummi, Kunststoff und dergleichen aufweisen können, kann die Anordnung der Klebeschicht 30 die neue Bindungsenergie zwischen dem Grundkörper 10 und der Schutzmembran 20 verbessern, was eine stabilere Gesamtstruktur der Dichtung ermöglicht und die Lebensdauer der Dichtung weiter verbessert.

Darüber hinaus kann die Dichtung 210 ferner mit einer Metallschicht auf einer Seite der Klebeschicht 30 versehen sein. Die Metallschicht kann aus Metallpartikeln bestehen, die auf der Klebeschicht 30 aufgetragen sind. Die Metallschicht aus Metallpartikeln ist aufgrund ihrer relativ geringen Dicke nicht in Figur 6 bezeichnet. Die Metallpartikel können durch Sandstrahlen und dergleichen auf der Klebeschicht 30 aufgetragen werden. Die Metallpartikel können Aluminiumpulverpartikel, Eisenpulverpartikel, Magnesiumpulverpartikel, Manganpulverpartikel, Zinkpulverpartikel und dergleichen umfassen, sind aber nicht darauf beschränkt. Die vorliegende Erfindung ist jedoch nicht hierauf beschränkt. Die Metallpartikel können beispielsweise auch Metalllegierungspulverpartikel sein, d. h., sie können aus einer Kombination von zwei oder mehr der Aluminiumpulverpartikel, Eisenpulverpartikel, Magnesiumpulverpartikel, Manganpulverpartikel und Zinkpulverpartikel ausgewählt werden. Da diese Metallpartikel eine gute Dichtigkeit aufweisen, kann nach dem Auftragen dieser Metallpartikel auf der Klebeschicht 30 auf der Außenseite des Grundkörpers 10 die Möglichkeit eines Gasaustritts aufgrund eines Eindringens durch das Innere der Dichtung weiter verringert werden, wodurch eine gute Dichtwirkung der Dichtung gegen Gase sichergestellt wird.

Es ist anzumerken, dass die Partikelgröße der Metallpartikel so ausgestaltet sein muss, dass die Dicke der Metallschicht aus den Metallpartikeln im Wesentlichen in derselben Größenordnung liegt wie die Dicke der Klebeschicht 30 und die Dicke der Schutzmembran 20, d. h., die Dicke der Metallschicht liegt ebenfalls im Wesentlichen im Bereich von 10 Nanometern bis 100 Nanometern, bevorzugt im Bereich von 30 Nanometern bis 50 Nanometern. Ferner können die Metallpartikel auf mindestens einer Seitenoberfläche der Klebeschicht 30 aufgetragen sein. Die Metallpartikel können bevorzugt auf beiden Seitenoberflächen der Klebeschicht 30 aufgetragen sein.

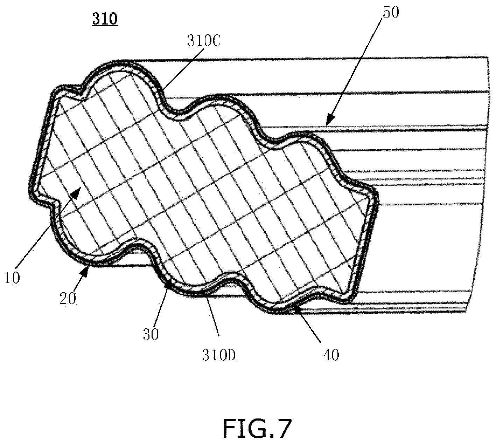

Figur 7 zeigt eine schematische Darstellung eines Teilschnitts einer Dichtung 310 gemäß einer dritten Ausführungsform der vorliegenden Erfindung. Die in Figur 7 gezeigte Dichtung 310 ist mit der in Figur 6 gezeigten Dichtung 210 im Wesentlichen identisch. Die Gemeinsamkeiten werden nicht wiederholt, sondern nur die Unterschiede werden im Folgenden beschrieben, wobei die gleichen Bezugszeichen die gleichen Symbole bezeichnen. Die in Figur 7 gezeigte Metallschicht ist ein Metallblech 40 (durch die durchgezogene schwarze Linie bezeichnet) und ist zwischen der Klebeschicht 30 und der äußersten Schutzmembran 20 angeordnet. Bei dem Metallblech kann es sich um ein Blech handeln, das aus mindestens einem der Elemente Aluminium, Eisen, Magnesium, Mangan und Zink besteht. Die Dicke des Metallblechs 40 liegt im Wesentlichen in derselben Größenordnung wie die Dicke der Klebeschicht 30 und die Dicke der Schutzmembran 20, d. h., die Dicke des Metallblechs 40 liegt ebenfalls im Wesentlichen im Bereich von 10 Nanometern bis 100 Nanometern, bevorzugt im Bereich von 30 Nanometern bis 50 Nanometern. Im Vergleich zu der in Figur 5 gezeigten partikelförmigen Metallschicht ist ein solches Metallblech 40 dichter und verdichteter und weist daher eine geringere Gasdurchlässigkeit auf, wodurch die Möglichkeit eines Gasaustritts aufgrund eines Eindringens durch das Innere der Dichtung deutlicher verringert werden kann und ferner eine gute Dichtwirkung der Dichtung gegen Gase sichergestellt wird.

Figur 7 zeigt lediglich den Aufbau, bei dem das Metallblech 40 zwischen der Klebeschicht 30 und der Schutzmembran 20 angeordnet ist, aber die vorliegende Erfindung ist nicht hierauf beschränkt. Beispielsweise kann zwischen der Klebeschicht 30 und dem Grundkörper 10 ein Metallblech angeordnet sein. Außerdem kann auch zwischen der Klebeschicht 30 und der Schutzmembran 20 sowie zwischen der Klebeschicht 30 und dem Grundkörper 10 jeweils ein Metallblech angeordnet sein.

Bevorzugt ist, wie in Figur 5 gezeigt, dass auf der ersten seitlichen Dichtungsoberfläche 210C und der zweiten seitlichen Dichtungsoberfläche 210D der Dichtung 210 jeweils eine Reliefstruktur 50 ausgebildet ist und, wie in Figur 7 gezeigt, ist auf der ersten seitlichen Dichtungsoberfläche 310C und der zweiten seitlichen Dichtungsoberfläche 310D der Dichtung 310 ebenfalls eine Reliefstruktur 50 ausgebildet ist. Im Vergleich zu der ebenen Ausgestaltung der ersten seitlichen Dichtungsoberfläche 110C und der zweiten seitlichen Dichtungsoberfläche 110D der Dichtung 110 ermöglicht diese Reliefstruktur 50 einen labyrinthartigen Kontakt zwischen den Dichtungen 210, 310 und der Kathodenmontageplatte 109 der Kathodenbaugruppe sowie zwischen den Dichtungen 210, 310 und dem Montagerahmen der Membranelektrodenbaugruppe 105, wodurch der Gasaustritt aus den Spalten zwischen den beiden benachbarten Elementen besser reduziert werden kann und die Dichtungsleistung der Dichtungen 210, 310 weiter verbessert wird. Die vorliegende Erfindung ist jedoch nicht hierauf beschränkt. Beispielsweise kann je nach tatsächlichem Bedarf nur auf der ersten seitlichen Dichtungsoberfläche der Dichtung oder nur auf der zweiten seitlichen Dichtungsoberfläche der Dichtung eine Reliefstruktur ausgebildet sein.

Darüber hinaus ist anzumerken, dass die in den Figuren 3 bis 4 gezeigte Dichtung 110, die in den Figuren 5 bis 6 gezeigte Dichtung 210 und die in Figur 7 gezeigte Dichtung 310 nicht nur für den in den Figuren 1 und 2 gezeigten Wasserelektrolyse-Stack 100, sondern auch für eine Brennstoffzelle (in den Figuren nicht gezeigt) wie z. B. eine Wasserstoff-Brennstoffzelle gelten können, wodurch das Austrittsrisiko von Gas aus der Dichtung wirksam reduziert oder sogar verhindert wird, wodurch eine gute Gasdichtigkeit gegen Gase sichergestellt und somit die Verwendungssicherheit der Brennstoffzelle verbessert wird.

Obwohl die vorliegende Anmeldung unter Bezugnahme auf die bevorzugten Ausführungsformen beschrieben wurde, können verschiedene Verbesserungen vorgenommen und Komponenten davon durch Äquivalente ersetzt werden, ohne vom Schutzumfang der vorliegenden Anmeldung abzuweichen, und insbesondere können die einzelnen technischen Merkmale, die in den einzelnen Ausführungsformen erwähnt sind, in beliebiger Weise kombiniert werden, solange kein struktureller Konflikt besteht. Die vorliegende Anmeldung ist nicht auf die hierin offenbarten bestimmten Ausführungsformen beschränkt, sondern umfasst alle technischen Lösungen, die in den Schutzumfang der Ansprüche fallen.

## Patentansprüche

1. Dichtung für einen Wasserelektrolyse-Stack (100) oder eine Brennstoffzelle, umfassend:
einen Grundkörper (10), der aus einem ersten Material hergestellt ist; und
eine Schutzmembran (20), mit der die Außenoberfläche des Grundkörpers (10) belegt ist, wobei die Schutzmembran (20) aus einem zweiten Material hergestellt ist, wobei sich das zweite Material von dem ersten Material unterscheidet und das zweite Material eine geringere Gasdurchlässigkeit als das erste Material aufweist.

2. Dichtung nach Anspruch 1, ferner umfassend:
eine Klebeschicht (30), die zwischen dem Grundkörper (10) und der Schutzmembran (20) vorgesehen ist, um den Grundkörper (10) und die Schutzmembran (20) durch Kleben aneinander zu befestigen.

3. Dichtung nach Anspruch 2,
wobei die Klebeschicht (30) aus einer höhermolekularen organischen Substanz hergestellt ist.

4. Dichtung nach Anspruch 2,
wobei zwischen dem Grundkörper (10) und der Klebeschicht (30) und/oder zwischen der Klebeschicht (30) und der Schutzmembran (20) ferner eine Metallschicht vorgesehen ist.

5. Dichtung nach Anspruch 4,
wobei die Metallschicht partikelförmig oder blechförmig ausgebildet ist und aus mindestens einem der Elemente Aluminium, Eisen, Magnesium, Mangan und Zink hergestellt ist.

6. Dichtung nach Anspruch 1,
wobei sich die Schutzmembran (20) unmittelbar an den Grundkörper (10) anschmiegt und fest mit dem Grundkörper (10) verbunden ist.

7. Dichtung nach einem der Ansprüche 1 bis 6,
wobei das erste Material ein Gummimaterial ist und das zweite Material ein Kunststoffmaterial ist.

8. Dichtung nach einem der Ansprüche 1 bis 6,
wobei die Schutzmembran (20) eine Dicke in einem Bereich von 10 Nanometern bis 100 Nanometern aufweist.

9. Dichtung nach einem der Ansprüche 1 bis 6,
wobei die Schutzmembran (20) eine Dicke in einem Bereich von 30 Nanometern bis 50 Nanometern aufweist.

10. Dichtung nach einem der Ansprüche 1 bis 6,
wobei die Dichtung eine erste seitliche Dichtungsoberfläche (30C) und eine zweite seitliche Dichtungsoberfläche (30D) umfasst, die einander gegenüberliegen, und auf der ersten seitlichen Dichtungsoberfläche (30C) und/oder der zweiten seitlichen Dichtungsoberfläche (30D) eine Reliefstruktur (50) ausgebildet ist.

11. Wasserelektrolyse-Stack (100), umfassend mindestens eine Dichtung nach einem der Ansprüche 1 bis 10.

12. Brennstoffzelle, umfassend mindestens eine Dichtung nach einem der Ansprüche 1 bis 10.
